Europäisches Patentamt

European Patent Office

Office européen des brevets

(11) Publication number: **0 027 266**
**B1**

## (12) EUROPEAN PATENT SPECIFICATION

(45) Date of publication of patent specification: **21.09.83**

(21) Application number: **80106179.7**

(22) Date of filing: **10.10.80**

(51) Int. Cl.³: **G 03 G 15/00,**
**G 03 G 15/26,**
**G 03 G 15/16, G 03 B 27/62**

(54) Document copying method and apparatus which corrects for positional errors of a transferable image.

(30) Priority: **12.10.79 US 84332**

(43) Date of publication of application:
**22.04.81 Bulletin 81/16**

(45) Publication of the grant of the patent:
**21.09.83 Bulletin 83/38**

(84) Designated Contracting States:
**DE FR GB NL**

(56) References cited:
**US - A - 4 078 787**

(73) Proprietor: **EASTMAN KODAK COMPANY**
**Patent Department 343 State Street**
**Rochester, New York 14650 (US)**

(72) Inventor: **Connin, John Lyman**
**105 Read Cedar**
**Longwood, Florida 32850 (US)**

(74) Representative: **Blickle, K. Werner, Dipl.-Ing. et al,**
**KODAK AKTIENGESELLSCHAFT Postfach 369**
**D-7000 Stuttgart 60 (DE)**

Courier Press, Leamington Spa, England.

## Document copying method and apparatus which corrects for positional errors of a transferable image

This invention relates to document copying.

In a known document copying method a transferable image is formed on an image member, a copy sheet is fed into image transfer relation with the image and the image is transferred to the copy sheet.

For example, U.S. Patent 4,076,408 discloses an electrophotographic copier in which the transferable image is formed by projection of an image of an original document onto a radiation sensitive image member carrying an electrostatic charge to form an electrostatic image which is then developed by application of toner. The toner is then transferred to a copy sheet.

If the position of the transferable image on the image member deviates from a desired nominal position, then the transferred image will not be in its desired position on the copy sheet. Deviation of the transferable image on the image member from the desired nominal position can occur for a number of reasons. The most common is deviation of the original document from its desired nominal position during exposure, generally either caused by an error in manual placement of the document or similar improper placement of the document by a document feeder.

In copiers using manual placement of documents, the exposure platen is marked to assist positioning, but errors persist, especially where there are markings for a variety of document sizes.

To correct such positional deviation in copiers using document feeders, prior document feeders stop each document for positioning prior to exposure. For example, the feeder shown in U.S. Patent 4,076,408 has a registration gate which engages the leading edge of the document to stop and position it for exposure.

Stopping the document in a document feeder for positioning unnecessarily slows the copying method. This is especially significant in copiers having recirculating feeders (for example, the copier shown in U.S. 4,076,408) in which documents are moved to the exposure position once for each exposure. With present flash exposure devices and sensitive photoconductors, documents can be exposed while moving, if proper positioning is not a problem.

It is the object of this invention to provide properly positioned images on a copy sheet in a copying method of the type which includes the steps of forming a transferable image on an image member, feeding a copy sheet into image transfer relation with the image member and transferring the image to the copy sheet.

This object is accomplished by the steps of determining any deviation from a nominal position of the transferable image on the image member and aligning the copy sheet with the transferable image in accordance with such deviation.

According to a preferred embodiment, the invention is applied to a known copying method in which the step of forming a transferable image includes the step of projecting a light image of an illuminated document onto a light sensitive member. In this embodiment, the step of determining any deviation of the transferable image comprises the step of determining any deviation of the document from a nominal position at the time of projection. With this embodiment, determination of the deviation is simple and reliable.

A remarkable application of the invention is in copiers in which an exposure is made of a moving document. Such copiers themselves have the advantages that they are faster, have fewer document jams, and have reduced leading edge damage to the moving documents. The invention compensates for a serious problem with such copier, that is, incorrect document positioning during exposure.

Fig. 1 is a schematic showing a side elevational view of a copier;

Fig. 2 is a partial perspective of a document feeder shown in Fig. 1;

Fig. 3 is a perspective of an adjustable registration and copy sheet feeding mechanism shown schematically in Fig. 1;

Figs. 4A—C show both top and front views of three positions of registration fingers shown in Fig. 3;

Fig. 5 is a block diagram of a logic and control unit shown in Fig. 1;

Fig. 6 shows in detail a speed changing mechanism which may be employed in the copier of Fig. 1;

Fig. 7 shows the speed changing mechanism of Fig. 6 and a worm and gear arrangement for driving a registration finger 32b; and

Fig. 8 shows another speed changing mechanism that can be used in the copier of Fig. 1.

Whenever the term "document" is used it refers to a particular document which may be of an original document set having one or more documents. The term "copy sheet" refers to a sheet which will or has received transfer of an image from an image member.

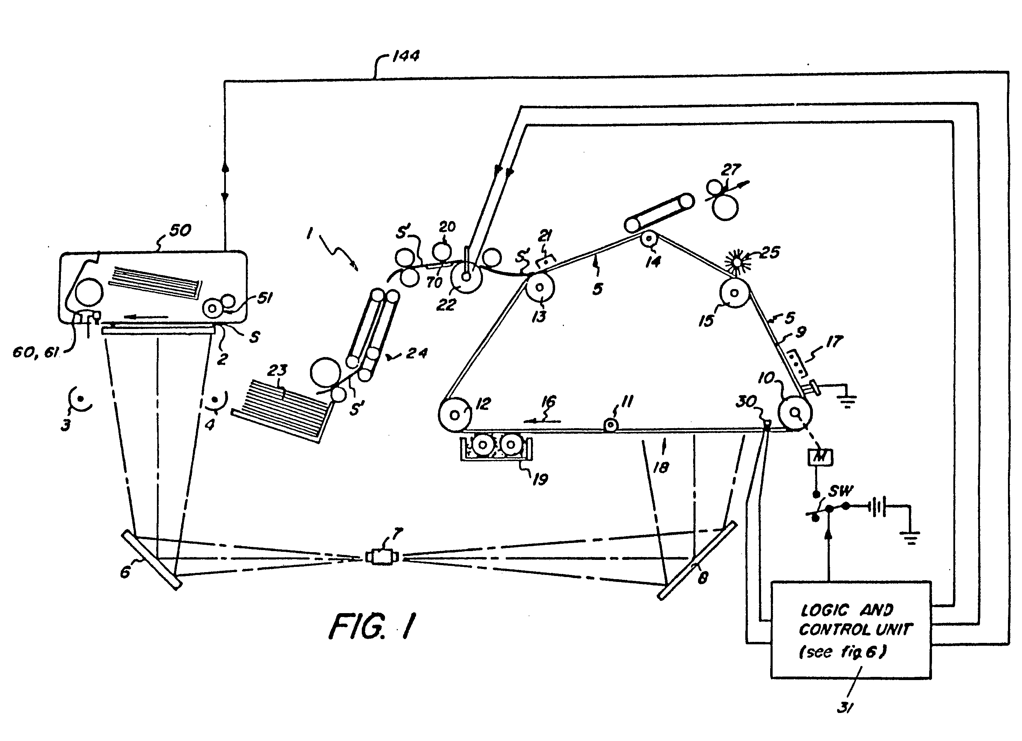

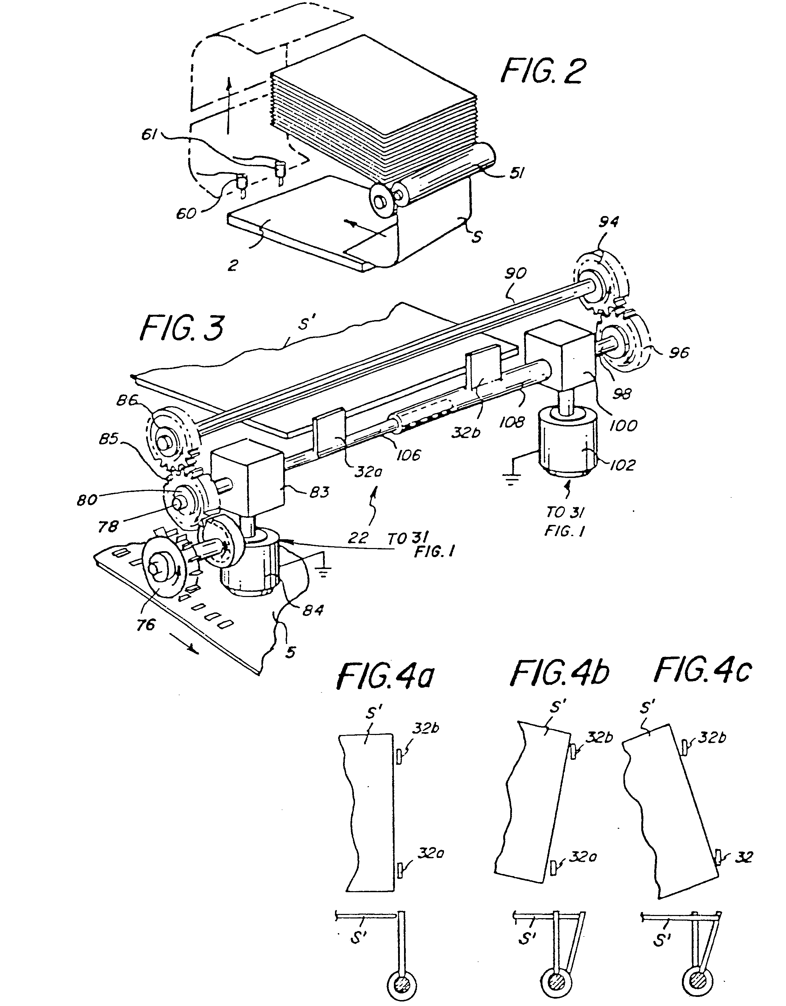

To assist in understanding the present invention, it will be useful to consider a copier 1 which includes a logic and control unit 31, and a document feeder 50. In the copier shown in Fig. 1, the document feeder 50 is of the type known as a recirculating feeder.

The feeder 50 is positioned on top of an exposure platen 2. The feeder can be similar to that disclosed in U.S. Patent No. 4,076,408 wherein a plurality of documents having images only on first sides of the documents can be repeatedly fed in succession from a document stack or set to exposure platen 2 of copier 1. Unlike the feeder disclosed in that patent, the feeder 50 does not include a registration gate to stop documents at the platen; it continuously moves documents across the platen.

The feeder 50 includes feed rollers 51 which transport a document S across the exposure platen 2 of the copier 1. The platen 2 is constructed of transparent glass. When energized, two xenon flash lamps 3 and 4 flash illuminate the moving document S. For a specific disclosure of an illumination arrangement, see U.S. Patent No. 3,998,541. As best shown in Fig. 2, sensors 60 and 61 are disposed adjacent to the downstream edge of the platen 2. For a specific example of one kind of edge sensor (e.g. a photocell) that can be used, see U.S. Patent No. 3,660,670. When the leading edge of document S covers these sensors, they provide signals to logic and control unit (LCU) 31 which determines positional deviation. By means of an object mirror 6, a lens system 7, and an image mirror 8, an image of the illuminated document is projected onto discrete image areas of a moving light sensitive image member, for example, a photoconductive web 5.

The photoconductive web 5 includes a photoconductive layer with a conductive backing on a polyester support. The web 5 is trained about six transport rollers 10, 11, 12, 13, 14 and 15, thereby forming an endless belt. Roller 10 is coupled to a drive motor M in a conventional manner. Motor M is connected to a source of potential U when a switch SW is closed by the logic and control unit (LCU) 31. When the switch SW is closed, the roller 10 is driven by the motor M and moves the web 5 in a clockwise direction indicated by arrow 16. This movement causes successive image areas of the web 5 to pass a series of electrophotographic work stations of the copier.

For the purpose of the instant disclosure, the several copier work stations along the web's path of movement include:

a charging station 17 at which a photoconductive surface 9 of the web 5 is sensitized by receiving a uniform electrostatic charge;

an exposing station 18 at which an image of the document S is projected into the photoconductive surface 9 of the web 5; the image dissipates the electrostatic charge at the exposed areas of the photoconductive surface 9 and forms an electrostatic image on surface 9;

a magnetic brush developing station 19 at which developing powder, including toner particles having an electrostatic charge opposite that of the electrostatic image, is brushed over the photoconductive surface 9 of the web 5; this causes the toner particles to adhere to the electrostatic image to form a visible, transferable image resembling the document S;

a transfer station shown as a corona charger 21, at which the transferable image on web 5 is transferred to a copy sheet S' by electrostatic transfer means; and

a cleaning station 25 at which the photoconductive surface 9 of the web 5 is cleaned of any residual toner particles remaining thereon after the transferable image has been transferred and is discharged of any residual electrostatic charge remaining thereon.

After transfer of the image to a copy sheet S', it is transported to fuser 27 where the transferred toner particles forming the image are fused to the copy sheet.

To coordinate operation of the various work stations 17, 18, 19, 21 and 25 with movement of the image areas on the web 5 past these stations, the web has a plurality of perforations (see Fig. 3) along one of its edges. These perforations generally are spaced equidistantly along the edge of the web 5. For example, the web member 5 may be divided into six image areas by F perforations; and each image area may be subdivided into 51 sections by C perforations. The relationship of the F and C perforations to the image areas is disclosed in more detail in U.S. Patent No. 3,914,047. At a fixed location along the path of web movement, there is provided suitable means 30 for sensing F and C web perforations. This sensing produces input signals and feeds them into LCU 31 having a digital computer. The digital computer has a stored program responsive to the input signals for sequentially actuating then deactuating the work stations as well as for controlling the operation of many other machine functions as disclosed in U.S. Patent No. 3,914,047.

Programming of a number of commercially available minicomputers or microprocessors such as an INTEL model 8080 or model 8086 microprocessor (which along with others can be used in accordance with the invention), is a conventional skill well understood in the art. The following disclosure is written to enable a programmer having ordinary skill in the art to produce an appropriate program for the computer. The particular details of any such program would, of course, depend upon the architecture of the selected computer.

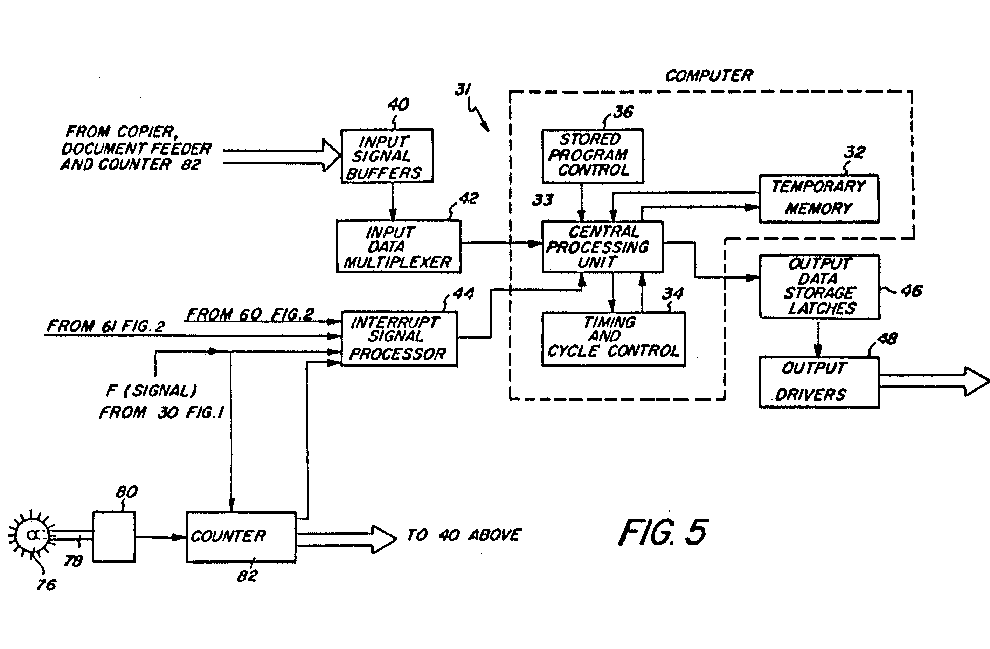

Turning now to Fig. 5, a block diagram of a typical logic and control unit (LCU) 31 is shown which interfaces with the rest of the apparatus. Leads 144 (Fig. 1) from feeder 50 provide inputs to and receive outputs from LCU 31 to synchronize the operation of the feeder with the rest of the apparatus. For a more detailed disclosure of an LCU as applied to a copier see; U.S. Patent No. 4,078,787. The LCU 31 consists of temporary data storage memory 32, central processing unit 33, timing and cycle control unit 34, and stored program control 36. Data input and output is performed sequentially under program control. Input data is applied either through input signal buffer 40 to an input data multiplexer 42 or directly to interrupt signal processor 44. The input signals are derived from various switches and sensors, and analog-to-digital converters. The output data and control signals are applied to output data storage latches 46 which provide inputs to suitable output drivers 48, directly coupled to leads. These leads are connected to the work stations and to an adjustable copy sheet registration and feeding mechanism 22 to be described later.

The time sequence of machine control signals (often referred to in the art as events) is critical to the copy cycle because the various mechanisms must be powered ON and OFF in the correct sequence to assure high quality copying and to prevent paper misfeeds, misregistration and erratic operation. One way of controlling the time sequence of events and their relationship to each other is, as noted above, to sense perforations which have a fixed positional relationship to the image areas on the web 5 as these areas continue through a copier. Thus, the detection of perforations by sensor 30 is applied to the LCU 31 through interrupt signal processor 44 (see Fig. 5) and is used to synchronize the various control mechanisms with the location of the image areas.

Returning now the computer, the program is located in stored program control 36 which may be provided by one or more conventional Read Only Memories (ROM). The ROM contains the operational program in the form of binary words corresponding to instructions and numbers. These programs are permanently stored in the ROM and cannot be altered by the computer operation.

Typically, the ROM is programmed at the manufacturer's facility to provide the required control functions such as work station sequential control, jam recovery, and operator observable messages. The ROM also has the required instructions controlling the operation of the mechanism 22.

The temporary data storage memory 32 may be conveniently provided by a conventional, Read/Write memory or Random Access Memory (RAM).

Mechanism 22 is shown in Figs. 1 and 3. As shown in Fig. 1, a copy sheet is fed to copy sheet registration feeding mechanism 22 by means of a conventional copier sheet advancing mechanism 24. The mechanism 22, after registering copy sheets, feeds them in a manner which corrects for the positional deviation of the transferable image on the image member, photoconductive web 5 in a manner hereinafter described.

The mechanism 22 includes a support 70 which receives sheets fed seriatim from mechanism 24 and defines a portion of the copy sheet travel path. Although only one continuously urging roller 20 is shown in Fig. 1, it will be understood that two or more rollers may be provided across the sheet travel path. For a more complete description of the rollers 20 and associated mechanisms, see U.S. Patent No. 4,019,732.

When the mechanism 24 is activated by the LCU 31, a copy sheet S' is fed from a supply 23 to the rollers 14, which then urge the sheet against rotating registration fingers 32a and 32b, respectively (Fig. 3). The registration fingers 32a and 32b continuously rotate in a clockwise (Fig. 1) direction driven by sprocket 76 and web 5. Their rotation is timed to intercept the faster moving sheet S' which is driven by rollers 20 with enough force to buckle against the fingers. When the fingers rotate free of the sheet, the driving action of the rollers 20 and the unbuckling sheet cause the sheet to move forward onto the photoconductor in alignment with a toner image on the web 5. The relative position of the fingers 32a and 32b corrects for positional deviation of a toner image caused by a skewed arrival of the document at the exposure platen or an arrival which is advanced or anretarded slightly with respect to a desired arrival. Upon release of sheet S', the fingers complete one full clockwise rotation to engage the next sheet. The fingers move at a speed, determined by the LCU, which will bring the fingers to a proper position for the next transferable image.

The sprocket 76 drives a gear 85 through intermediate gearing. Gear 85 is keyed to a shaft 78. Also keyed to the shaft 78 is a shaft encoder 80. The shaft encoder 80 continuously provides high resolution pulse signals to a counter 82 (shown schematically in Fig. 5). Shaft encoders are well known in the art and transduce the shaft rotation into electrical pulses; see for example, U.S. Patent Nos. 3,432,847 and 4,072,415. The shaft 78 also extends into a speed changing mechanism 83. A gear 86 fixed to one end of a shaft 90, is driven by gear 85. Another gear 94 is keyed to the other end of the shaft 90. The gear 94 drives another gear 96 which in turn continuously rotates a shaft 98 that provides an input into a second speed changing mechanism 100. Extending from mechanism 83 is a shaft 106 to which is secured finger 32a. A hollow shaft 108 extends from mechanism 100 and carries the finger 32b. The barrel of the hollow shaft 108 receives the free end of the shaft 106 which freely rotates in such barrel.

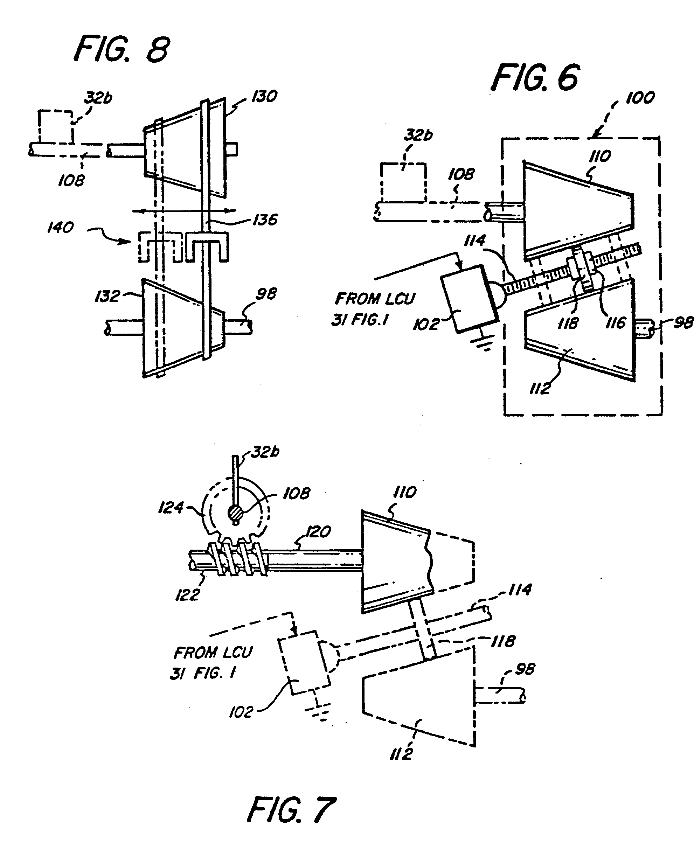

As described above, the mechanism 22 is constructed such that the fingers 32a and 32b can be individually advanced or retarded to compensate for the positional deviation of an image on the web 5. This is accomplished by the stepping motors 84 and 102 acting through speed changing mechanism 83 and 100, respectively. In Fig. 6 the mechanism 100 is provided with a cone 110 fixed to rotatable shaft 108, and a second cone 112 fixed to shaft 98 and positioned with the tip of one cone disposed adjacent to the base of the other cone. A rotatable threaded spindle 114 is positioned between the cones. A thimble 116 is threaded on the spindle for translational movement along the axis of the spindle. A roller 118, rotatably mounted on the thimble, engages the surface of the cones 110 and 112 with sufficient friction so that the cone 112 drives the roller 118 which drives the cone 110. The stepping motor 102 responds to a series of pulses that are provided by the LCU 31 and rotates the spindle 114 in discrete increments to advance or retreat the thimble 116 to thereby accurately change the position of the roller 118 with respect to the cones. The position of the roller is determined by the LCU 31 in response to signals provided by the photocell 61. In its left hand dotted line position, the roller 118 causes the cone 110 and consequently, the shaft 108 to rotate slower that in the solid line position. When in the right hand dotted line position, the roller 118 causes the cone 110 to rotate even faster then when it is in the solid line position.

Fig. 7 shows an alternative speed changing mechanism to that shown in Fig. 6. In this embodiment, a shaft 120 includes a worm 122 which meshes with a gear 124 keyed to the shaft 108 which carries the finger 32b. The advantage of this arrangement is that the worm and gear will more smoothly drive the shaft 108.

Another speed changing mechanism is shown in Fig. 8 and includes a cone pulley 130 fixed to shaft 108, an identical, but reversed, in position (viz. the tip of one cone is adjacent to the base of the other cone), cone pulley 132 fixed to shaft 98, and a belt 136 trained about the cone pulleys. A shifter mechanism 140, only partially shown, includes a mechanism which, in response to a stepping motor, changes the position of the belt along the periphery of the cone pulleys. The stepping motor, of course, responds to pulse signals from the LCU 31. In the solid line position of belt 136, shaft 108 is rotated at a slower angular velocity than shaft 98. In the dotted line position of belt 136, the shaft 108 is rotated at a faster angular velocity than when the belt is in its solid line position.

In operation, after the LCU 31 calculates the desired position of finger 32b relative to its position when releasing the previous sheet (this process will be described later), it applies a series of pulses to the stepping motor 102. The number of such pulses corresponds to the speed the finger must assume compared to its present speed and the sign of the pulses (i.e. positive or negative) determines the direction of the change in speed.

Stepping motors offer advantages in that they are quite accurate. Moreover, since they provide incremental motion, they are readily controlled by a digital computer. Further, they often have such accuracy that the need for feedback transducers can be eliminated. Nevertheless, it is well known to provide closed-loop control of a high resolution stepping motor to ensure that it keeps in step with received pulses. See for example, U.S. Patent No. 3,575,653.

Figs. 4A—C show the fingers in three different sheet engaging positions. In Fig. 4A, both the fingers are aligned; in Fig. 4B, finger 32b is advanced relative to finger 32a and in Fig. 4c, finger 32b is retarded relative to finger 32a.

To prevent the computer from being interrupted excessively by the high resolution signals produced by the shaft encoder 80, the counter 82 buffers these signals from the corresponding computer interrupt input (see Fig. 5). Counter 82 is reset by the F perforation signal and configured so that computer can read its contents through input signal buffers 40. In response to interrupt signals produced by the document edge sensors 60 and 61, the computer reads the contents of the counter 82.

The sequential events to correct for an image positional error caused by the arrival time of the document at the platen 2 being advanced or delayed with respect to a desired arrival time will now be set forth. Since only sensor 60 is needed to provide this operation, sensor 61 will not be described. In this case fingers 32a and b remain in an aligned position and the LCU 31 provides the identical control pulses to the stepping motors 84 and 102.

1. The LCU 31 initiates feeding of a document to the platen 2 such that its expected time of arrival will correspond to the time that an image area the web 5 is centered on the exposure station 18.

2. When the document activates sensor 60, it provides a signal to the LCU 31. After receiving both this signal and an F perforation signal, the LCU 31 energizes lamps 3 and 4 and flash exposure occurs, thereby causing a latent image of the document to be formed on the web 5.

3. Simultaneous with exposure, the position of the latent image is stored in memory 32 by recording the contents of the counter 82. For example, it can record the number of pulses produced between the signal from sensor 60 and the F perforation signal.

4. LCU 31 calculates a number representing advance or retard required to compensate for any deviation from nominal of the location of the latent image. This is accomplished by subtracting the count recorded in step three from the count corresponding to the position of a centered latent image (a predetermined fixed number stored in program control 36). The magnitude of the calculated number corresponds to the distance fingers 32a and b must be advanced or retarded. (This assumes that the fingers start at a nominal position. If error correction for the preceding sheet causes either finger to be advanced or retarded from nominal, the LCU must adjust accordingly.)

5. Prior to a copy sheet arriving at the registration area, but after registration had been effected for the previous sheet, the LCU 31 activates the stepping motors 84 and 102 to advance or retard the registration fingers 32a and b in accordance with the number calculated in step four. Thus, after a copy sheet engages the registration fingers, it is held by them for a time so that when it is released, it moves into proper alignment with the latent image on the web 5.

The sequential events to correct for an image positional error caused by either arrival time or skew of the document at the platen will now be set forth. Both the sensors 60 and 61 are needed to correct for skew.

1. The LCU 31 causes a document to be fed such that its expected time of arrival at the platen 2 corresponds to the time an image area of the photoconductor 5 is centered at the exposure station 18.

2. Upon actuation, document sensor 60 provides a signal to the LCU 31 which, after the LCU has received this signal and an F perforation signal, causes flash exposure.

3. Upon exposure, the computer stores the corresponding count held in the counter 82.

4. When activated by a leading edge of a document, sensor 61 provides a signal to the LCU 31 which then records the corresponding count held by the counter 82. This event may occur before, during, or after step 2, depending on whether the document is skewed and in which direction.

5. The computer then subtracts the count corresponding to when the sensor 60 was activated from the count corresponding to a nominal image, (a predetermined fixed number) and this number and its sign correspond to the distance and direction respectively that finger 32a needs to be advanced or retarded from a nominal releasing position (again, assuming a nominal starting position for finger 32a).

6. The computer then subtracts the count corresponding to when sensor 61 was actuated from the counter corresponding to a nominal image, and the sign of this number corresponds to the direction and its magnitude to the distance the copy registration finger 32b needs to be advanced or retarded from its nominal releasing position to properly skew the sheet to align it with the transferable image on the photoconductor.

7. The LCU 31 then applies a series of pulses to the motors 84 and 102 respectively, which correspond to the desired engagement position of the fingers relative to their present positions. Thus, when the copy sheet comes in contact with these fingers, it will be skewed by the fingers an amount required to match the orientation of the latent image. The copy sheet is then fed forward onto the web 5 into alignment with the skewed transferable image.

In the event the LCU 31 computes that the positional deviation is outside the range which can be accommodated by the mechanism 22, then the LCU would shutdown the copier and/or provide a message to the operator.

The invention has been described with particular reference to a preferred embodiment thereof, but it will be appreciated that variations and modifications can be effected within the spirit and scope of the invention. For example, provision can be made for additional sensors adjacent to the exposure platen to detect the side edges of a document and compensate for a positional deviation caused by a lateral offset of a document at the exposure platen.

Further, the positional deviation of a transferable image can be determined directly from an image on the image member rather than from a document at the exposure platen. In such embodiment detectors can be located between the exposure station and the transfer station to directly detect the boundary of either the electrostatic image or the toner image on the web 5. However, it should be noted that present copiers are designed to minimize detectability of such boundaries lest a line appear on the final image on the copy sheet. Therefore, the invention is more simple and reliable if errors are detected at the document platen.

The invention is shown in the specific embodiment with a single image member, web 5 which is also a light sensitive member, i.e. a photoconductor. However, the invention can be used with known structures in which exposure is made onto a light sensitive member separate from the image member and either the electrostatic or toner image is transferred to the image member before being transferred to the copy sheet.

**Claims**

1. A document copying method comprising the steps of forming a transferable image on the image member (9), feeding a copy sheet (S') into image transfer relation with the transferable image and transferring the image to the copy sheet (S'), characterized by the steps of determining any deviation from a nominal position of the transferable image on the image member (9) and aligning the copy sheet (S') with the transferable image in accordance with such deviation.

2. The method according to claim 1 in which the step of forming a transferable image includes the step of projecting a light image of a document (S) onto a light sensitive member (5, 9), and characterized in that the step of determining any deviation of the document (S) from a nominal position for said document (S) at the time of projection.

3. A document copier having means (3, 4) for flash illuminating a moving document (S), means (6, 7, 8) for projecting an image of said document (S) onto an image member (9), means for forming a transferable image corresponding to said projected image, means (24, 22) for feeding a copy sheet (S') into image transfer relation with said transferable image, and means (21) for transferring the transferable image to the copy sheet (S'); characterized by means (31, 60, 61) for determining any deviation from a nominal position of the transferable image, said means including sensor means (60, 61) for detecting the passing of an edge of a moving document (S) past a reference position which reference position bears a predetermined relation to the nominal position of the document (S) during a flash illumination, and in that said means for feeding includes means (22, 32a, 32b) for aligning the copy sheet (S') with the transferable image in accordance with such determined deviation of the transferable image.

4. A document copier according to claim 3, characterized in that the sensor means includes two sensors (60, 61) positioned to detect passing of different portions of the same edge of a document (S).

5. A copier according to either of claims 3 or 4, characterized in that the means (22) for aligning the copy sheet (S') includes finger means (32a, 32b) for intercepting and retarding movement of the copy sheets (S'), which finger means (32a, 32b) is movable to release the copy sheets in timed relation with movement of the image member and means (83, 84, 100, 102) for controlling the movement of the finger means (32a, 32b) according to said determined deviation of the transferable image.

6. A copier according to claim 5, characterized in that the finger means includes two fingers (32a, 32b) positioned to engage different portions of the leading edge of a copy sheet (S'), which fingers (32a, 32b) are continuously rotatable in timed relation with the moving copy sheets (S') to engage and release the copy sheets (S') one at a time, and in that the means for controlling the movement of the finger means includes means (83, 84, 100, 102) for varying the speed of rotation of each finger (32a, 32b) individually to vary the release of each finger (32a, 32b) according to said determined deviation of the transferable image.

7. A copier according to claim 6, characterized in that each finger (32a, 32b) is fixed to a shaft (106 respectively 108) which is coupled with its associated speed variation means (83, 84 respectively 100, 102), that both shafts (106, 108) are rotatable about a common axis and that one shaft (106) provides for a support of the other shaft (108) for rotation independent of the one shaft (106).

8. A copier according to any of preceding claims 4 through 7, characterized in that one and/or the other of the sensors (60 respectively 61) provide(s) signals responsive to the amount of positional deviation to a logic and control unit (31) which determines positional deviation of the tranferable image and adjusts said means (22, 32a, 32b) for aligning the copy sheet (S') with the transferable image in accordance with such determined positional deviation.

**Patentansprüche**

1. Vorlagenkopierverfahren, bei dem nacheinander auf einem Biltträger (9) ein übertragbares Bild erzeugt, dann ein Kopieblatt (S') mit dem übertragbaren Bild in eine die Übertragung ermöglichende Beziehung gebracht und schließlich das Bild auf das Kopieblatt (S') übertragen wird, dadurch gekennzeichnet, daß jede Abweichung des übertragbaren Bildes von einer gewünschten Position auf dem Bildträger (9) festgestellt und das Kopieblatt (S') nach Maßgabe dieser Positionsabweichung mit dem übertragbaren Bild ausgerichtet wird.

2. Verfahren nach Anspruch 1, bei dem bei der Erzeugung des übertragbaren Bildes ein Lichtbild einer Vorlage (S) auf einen lichtempfindlichen Bildträger (5, 9) projiziert wird, dadurch gekennzeichnet, daß bei der Feststellung von Positionsabweichungen des übertragbaren Bildes jede Positionsabweichung der Vorlage (S) von einer für diese Vorlage (S) gewünschten Stellung zum Zeitpunkt der Projektion festgestellt wird.

3. Vorlagenkopiergerät mit Mitteln (3, 4) zur Blitzbelichtung einer sich bewegenden Vorlage (S), Mitteln (6, 7, 8) zum Projizieren eines Bildes der Vorlage (S) auf einem Bildträger (9), Mitteln zum Erzeugen eines dem projizierten Bild entsprechenden übertragbaren Bildes, Mitteln (24, 22) zum Uberführen eines Kòpieblattes (S') in eine die Bildübertragung ermöglichende Beziehung zu dem übertragbaren Bild und Mitteln (21) zum Übertragen des übertragbaren Bildes auf das Kopieblatt (S'), dadurch gekennzeichnet, daß Mittel (31, 60, 61) zum Feststellen von Positionsabweichungen des übertragbaren Bildes von einer gewünschten Stellung vorgesehen sind, wobei diese Mittel Sensoreinrichtungen (60, 61) aufweisen, die feststellen, wenn sich eine Kante einer sich bewegenden Vorlage (S) an einer Bezugsposition vorbeibewegt, die zu der gewünschten Stellung der Vorlage (S) während ein Blitzbelichtung in einer vorbestimmten Beziehung steht, und daß die Zuführmittel Einrichtungen (22, 32a, 32b) umfassen, mit denen das Kopieblatt (S') mit dem übertragbaren Bild nach Maßgabe der festgestellten Positionsabweichung des übertragbaren Bildes ausgerichtet werden kann.

4. Vorlagenkopiergerät nach Anspruch 3, dadurch gekennzeichnet, daß die Sensoreinrichtung zwei Sensoren (60, 61) umfaßt, die so angeordnet sind, daß sie den Durchlauf verschiedener Abschnitte der gleichen Kante einer Vorlage (S) feststellen.

5. Kopiergerät nach einem der Ansprüche 3 oder 4, dadurch gekennzeichnet, daß die Einrichtungen (22) zum Ausrichten des Kopieblattes (S') fingerförmige Einrichtungen (32a, 32b) umfassen, die die Kopieblätter (S') festhalten und in ihrer Bewegung bremsen, wobei die Einrichtungen (32a, 32b) so bewegbar sind, daß sie die Kopieblätter in einem zeitlich abgestimmten Verhältnis zur Bewegung des Bildträgers freigeben, sowie Mittel (83, 84, 100, 102), mit denen die Bewegung der fingerförmigen Einrichtungen (32a, 32b) gemäß der festgestellten Positionabweichung des Bildes steuerbar ist.

6. Kopiergerät nach Anspruch 5, dadurch gekennzeichnet, daß die fingerförmigen Einrichtungen zwei Finger (32a, 32b) umfassen, die derart angeordnet sind, daß sie an unterschiedlichen Abschnitten der Vorlaufkante eines Kopieblattes (S') angreifen, wobei die Finger (32a, 32b) in einem zeitlich abgestimmten Verhältnis zu den sich bewegenden Kopieblättern (S') kontinuierlich drehbar sind, derart, daß sie jeweils nur ein Kopieblatt (S') erfassen und freigeben, und daß die Mittel zum Steuern der Bewegung der fingerförmigen Einrichtungen Mittel (83, 84, 100, 102) umfassen, mit denen die Drehgeschwindigkeit jedes Fingers (32a, 32b) für sich veränderbar ist, wodurch sich die Freigabe durch den jeweiligen Finger (32a, 32b) gemäß der festgestellten Abweichung des übertragbaren Bildes ändern läßt.

7. Kopiergerät nach Anspruch 6, dadurch gekennzeichnet, daß jeder Finger (32a, 32b) an einer Welle (106 bzw. 108) befestigt ist, die jeweils mit der ihr zugeordneten Einrichtung zur Geschwindigkeitsänderung (83, 84 bzw. 100, 102) gekoppelt ist, daß beide Wellen (106, 108) um eine gemeinsame Achse drehbar sind und daß die erste Welle (106) ein Lager für die zweite Welle (108) bildet, um das diese unabhängig von der ersten Welle (106) drehbar ist.

8. Kopiergerät nach einem der vorhergehenden Ansprüche 4 bis 7, dadurch gekennzeichnet, daß der eine und/oder andere der Sensoren (60 bzw. 61) in Abhängigkeit von dem Ausmaß der Positionabweichung einer Logik- und Steuereinheit (31) Signale zuführt bzw. zuführen, die die Positionsabweichung des übertragbaren Bildes bestimmt und die Einrichtungen (22, 32a, 32b) einstellt, mit denen das Kopieblatt (S') mit dem übertragbaren Bild gemäß der festgestellten Positionsabweichung ausgerichtet wird.

**Revendications**

1. Procédé de reproduction de documents comprenant les étapes suivant lesquelles on forme une image transférable sur un organe d'image (9), on place une feuille de copie (S') en relation de transfert d'image avec l'image transférable et on transfère l'image à la feuille de copie (S'), caractérisé en ce qu'on détermine tout écart à partir d'une position nominale de l'image transférable sur l'organe d'image (9) et on aligne la feuille de copie (S') et l'image transférable en fonction de cet écart.

2. Procédé conforme à la revendication 1, dans lequel l'étape de formation d'une image transférable comprend la projection d'une image lumineuse d'un document (S) sur un organe sensible à la lumière (5,9), et caractérisé en ce que l'étape de détermination d'un écart de l'image transférable comprend la détermination d'un écart du document (S) à partir d'une position nominale de ce document (S) au moment de la projection.

3. Copieur de document comprenant des moyens (3,4) pour éclairer un document en mouvement (S) avec un éclair de lumière, des moyens (6,7,8) pour projeter une image de ce document (S) sur un organe d'image (9), des moyens pour former une image transférable correspondant à cette image projetée, des moyens (24,22) pour mettre en place une feuille de copie (S') en relation de transfert d'image avec cette image transférable et un moyen (21) pour transférer l'image transférable et un moyen (21) pour transférer l'image transférable sur la feuille de copie (S'), caractérisé par de moyens (31,60,61) pur déterminer tout écart de l'image transférable à partir d'une position nominale, ces moyens comprenant des moyens détecteurs (60,61) pour détecter le passage d'un bord d'un document (S) en mouvement sur une position de référence en relation prédéterminée avec la position nominale du document (S) pendant l'éclair, et en ce que les moyens de mise en place comprennent des moyens (22,32a,32b) pour aligner la feuille de copie (S') et l'image transférable en fonction de l'écart déterminé de l'image transférable.

4. Copieur conforme à la revendication 3, caractérisé en ce que les moyens détecteurs comprennent deux détecteurs (60,61) placés pour détecter le passage de différentes parties du même bord du document (S).

5. Copieur conforme à l'une quelconque des revendication 3 ou 4, caractérisé en ce que le moyen (22) pour aligner la feuille de copie (S') comprend des moyens de doigt (32a,32b) pour intercepter et retarder le mouvement des feuilles de copie (S'), ces moyens de doigt (32a,32b) étant mobiles pour libérer les feuilles de copie en relation de temps avec le mouvement de l'organe d'image et des moyens (83,84,100,102) pour commander le mouvement des moyens (32a,32b) en fonction dudit écart déterminé de l'image transférable.

6. Copieur conforme à la revendication 5, caractérisé en ce les moyens de doigt comprennent deux doigts (32a,32b) placés de manière à attaquer différentes parties du bord d'attaque d'une feuille de copie (S'), ces doigts (32a,32b) tournant continûment en relation de temps avec les feuilles de copie (S') en mouvement, pour attaquer et libérer une par une les feuilles de copie (S'), et en ce que les moyens de commande du mouvement des doigts comprennent des moyens (83,84,100,102) pour faire varier la vitesse de rotation de chaque doigt (32a,32b) individuellement pour faire varier la libération de chaque doigt (32a,32b) en fonction de l'écart déterminé de l'image transférable.

7. Copieur conforme à la revendication 6, caractérisé en ce que chaque doigt (32a,32b) est fixé à une arbre (106, respectivement (108) couplé à des moyens de variation de vitesse associés (83,84 respectivement 100,102), en ce que les deux arbres (106,108) tournent autour d'un axe commun et en ce qu'un arbre (106) constitue un support pour l'autre arbre (108) qui tourne indépendamment de la'arbre (106).

8. Copieur conforme à l'une quelconque des revendications 4 à 7, caractérisé en ce que l'un et/ou l'autre des détecteurs (60, respectivement 61) fourni(ssen)t des signaux à une logique de commande (31) en fonction de l'écart de position, cette logique déterminant l'écart de position de l'image transférable et réglant les moyens (22,32a,32b) pour aligner la feuille de copie (S') et l'image transférable en fonction de l'écart de position déterminé.

FIG. I

FIG. 2

FIG. 3

FIG.4a    FIG.4b    FIG.4c

FIG. 5

FIG. 8

FIG. 6

FIG. 7

4